# EUROPEAN PATENT APPLICATION

(11) **EP 4 451 356 A1**
(43) Date of publication of application: **23.10.2024**
(21) Application number: 23169177.5
(22) Date of filing: 21.04.2023
(51) Int. Cl.: H01M 4/04, H01M 4/131, H01M 4/1391, H01M 4/36, H01M 4/525, H01M 4/62, H01M 10/0525, H01M 10/0568, H01M 10/0569, H01M 4/02

(54) **PROPYLENE CARBONATE SOLVENT-BASED ELECTRODE COATING PROCESSES AND CATIONIC POLYMER COATED ELECTRODES**

(71) Applicant: EMPA Eidgenössische Materialprüfungs- und Forschungsanstalt, 8600 Dübendorf (CH)
(72) Inventor: Homann, Gerrit, 8304 Wallisellen (CH); Battaglia, Corsin, 8315 Lindau (CH)
(74) Representative: Michalski Hüttermann & Partner Patentanwälte mbB

(57) **Abstract**

The invention relates to a process for coating electrode surfaces with a cationic polymer, wherein the process comprises at least the steps of: a) Provision of an electrode; b) Dissolution of a cationic polymer according to the following formula I 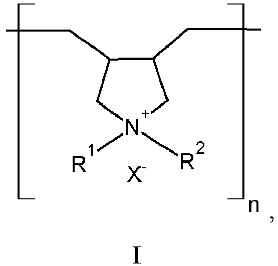 wherein X⁻ is selected from the group consisting of Cl⁻, FSI⁻, TFSI⁻, TFA⁻, BETI⁻, BF₄⁻, DFOB⁻, BOB⁻, NO₃⁻, PO₂F₂⁻; R¹, R² are independently selected from the group consisting of H, C1-C5 linear or branched alkyl or fluorinated derivatives thereof, and n = 10 - 10.000; in a solvent, wherein the solvent comprises equal to or greater than 30 wt.-% propylene carbonate; c) Coating of at least one electrode surface of the electrode provided in process step a) by deposition of the polymer solution obtained in process step b) to at least a part of the electrode surface; and d) Drying of the coated electrode obtained in process step c). In addition, the invention relates to a coated electrode and a solid electrolyte cell comprising a coated electrode.

## Description

The invention relates to a process for coating electrode surfaces with a cationic polymer, wherein the process comprises at least the steps of: a) Provision of an electrode; b) Dissolution of a cationic polymer according to the following formula I 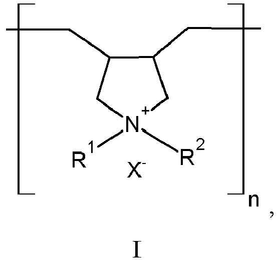 wherein X⁻ is selected from the group consisting of Cl⁻, FSI⁻, TFSI⁻, TFA⁻, BETI⁻, BF₄⁻ , DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000; in a solvent, wherein the solvent comprises equal to or greater than 30 wt.-% propylene carbonate; c) Coating of at least one electrode surface of the electrode provided in process step a) by deposition of the polymer solution obtained in process step b) to at least a part of the electrode surface; and d) Drying of the coated electrode obtained in process step c). In addition, the invention relates to a coated electrode and a solid electrolyte cell comprising a coated electrode.

The need for fundamental changes of our overall energy spending habits and the used energy sources is rapidly increasing in the recent years. This is especially true, because besides the global warming also the availability or unavailability of certain carbon-based energy sources is driving the overall energy landscape to renewable sources. In principle, it is known how to generate green electric energy by photovoltaic or wind energy without increasing the carbondi-oxide footprint. Nevertheless, based on the sheer amount of required energy and the local mismatch between the places of energy consumption and generation, cheap and practicable storage solutions are nowadays in focus, to provide the necessary flexibility and resilience to the overall power distribution grid. Therefore, suitable energy storage solutions in the form of batteries are of particular interest for mobile as well as stationary applications. Besides alkali-ion batteries comprising liquid electrolytes, so-called all-solid-state batteries are developed, because solid electrolytes may comprise several advantages compared to their conventional partially liquid based counterparts. Solid-state electrolytes can reduce the risk of a thermal runaway or an explosion of the battery and, consequently, are able to increase the overall safety and the cycle stability of batteries. Independently of the actual set-up of the electrolyte, i.e., either liquid or solid, it has been found, that it might be beneficial for the cycle stability and the overall performance of the electrodes to modify the electrode surface by special coatings.

In the patent literature a lot of documents deal with surface modifications of electrodes in alkali-ion batteries.

WO 2015 029 248 A1 for instance discloses a negative electrode active material-coating material for lithium-ion secondary batteries. The material is a polyvinyl polymer which comprises a main chain and a branched chain that has a functional group containing an SO₂NSO₂CF₃X group. In this connection, X represents hydrogen, an alkali metal, or an alkaline earth metal. Consequently, there can be provided a negative electrode which has small irreversible capacity and low resistance. In addition, a lithium-ion secondary battery which has large capacity and excellent output characteristics can be achieved by using this negative electrode.

WO2017094719A1 describes a lithium ion secondary battery that has improved cycle characteristics and employs a silicon material as a negative electrode active material. The lithium-ion secondary battery comprises a negative electrode containing at least a copolymer and a material including silicon as a constituent element, and is characterized in that the copolymer includes a monomer unit based on an alkali metal salt of an ethylenically unsaturated carboxylic acid and a monomer unit based on an aromatic vinyl, and in that the copolymer contains at least 1000 mass ppm of the alkali metal forming the alkali metal salt.

In addition, KR102223866B1 discloses a process for preparing a positive electrode active material powder. The process includes: Coating the surface of the positive electrode active material powder with a material containing a first polymer electrolyte monomer; Any of primary polymerization and crosslinking of the material containing the coated polymer electrolyte monomer; Obtaining a positive electrode active material powder coated with a polymer by performing at least one; Positioning the positive electrode active material coated with the polymer on a current collector; Injecting a material containing a second polymer electrolyte monomer into the current collector; and secondary polymerization of a material containing the second polymer electrolyte monomer; wherein the first polymer electrolyte monomer and the second polymer electrolyte monomer are of the same type, and a method for manufacturing a composite positive electrode for a solid lithium ion battery.

Such solutions known from the prior art may offer further potential for improvement. This relates in particular to the cycle stability of the electrode and especially to the stability and functionality of the electrode surface in the course of electrical charging and discharging processes.

It is therefore the task of the present invention to at least partially overcome the disadvantages known from the prior art. In particular, it is the task of the present invention to provide a coating process which allows to improve the cycle stability of secondary alkali- or other batteries during charging and discharging by application of a polymer to the electrode surface of at least one electrode. Furthermore, it is the task of the present invention to provide a coated electrode for secondary alkali batteries and secondary alkali batteries as such, comprising a coated electrode.

The task is solved by the features of the independent claims, directed to the process according to the invention as well as the coated electrode and the solid electrolyte cell according to the invention. Preferred embodiments of the invention are indicated in the dependent claims, in the description or in the figures, whereby further features described or outlined in the dependent claims, in the description or in the figures may individually or in any combination constitute an object of the invention, if the context does not clearly indicate the contrary.

According to the invention, the problem is solved by a process for coating electrode surfaces with a cationic polymer, wherein the process comprises at least the steps of:
a) Provision of an electrode;
b) Dissolution of a cationic polymer according to the following formula I 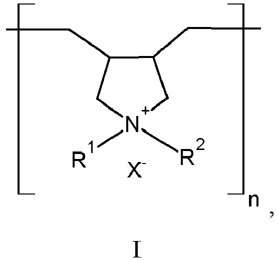 wherein X⁻ is selected from the group consisting of Cl⁻, FSI⁻, TFSI⁻, TFA⁻, BETI⁻, BF₄⁻ , DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000; in a solvent, wherein the solvent comprises equal to or greater than 30 wt.-% propylene carbonate;
c) Coating of at least one electrode surface of the electrode provided in process step a) by deposition of the polymer solution obtained in process step b) to at least a part of the electrode surface;
d) Drying of the coated electrode obtained in process step c).

Surprisingly, it was found that the process according to the invention is able to provide coated electrodes suitable for the use in solid or liquid electrolyte secondary alkali batteries. The electrodes show a much better cycling behaviour compared to uncoated electrodes. In addition, the coating step using a dissolved cationic polymer is very reproducible and allows the coating of flat or porous electrode surfaces. Without being bound by theory, it is assumed that especially the dissolution of the cationic polymer backbone poly(diallyldimethylammonium) (poly(DDA)) or derivatives thereof, irrespective of the chemical nature of the anionic counterion, in a solvent consisting of or comprising to a large extent propylene carbonate (PC) results in a favourable entanglement of the polymeric chains and an even distribution of the polymer over the electrode surface. The system can, in addition, be tailored in that the viscosity of the dissolved polymer is low enough, to also penetrate small hole in porous electrodes. Therefore, also porous surfaces can be coated and mechanically and chemically stabilized, resulting in electrodes and batteries comprising such electrodes with a better electric performance. Another advantage can be seen in the fact that the coatings can be rather thick. It is for instance possible to provide surface coatings, wherein the stabilizing coating may, at the same time, also act as a solid electrolyte. In the latter case it is helpful to integrate a conductive salt and an ionic liquid into the coating. Without further to be bound by the theory, it is believed that especially the PC is not just acting as the right solvent for dissolving the cationic polymer to result in a favourable viscosity. It is also possible, that remaining solvent molecules in the coating after the drying step enhance the positive characteristics of the cationic polymer coating. The remaining solvent molecules might enhance the mechanical flexibility of the polymeric chains and might also influence or improve the diffusion behaviour of charged alkali species through the coating layer. Another advantage of PC in this respect is its high boiling point of 242°C. It was observed in experiments that the addition of common additives used in electrolytes for lithium-ion or lithium-metal batteries, e.g., LiBOB, LiDFOB, LiBF₄, or inorganic fillers like e.g. Al₂O₃ or TiO₂ nano-particles, lead to accelerated solvent evaporation when using e.g. acetonitrile, associated with a reduced solvent-based coordination of the ions in solution. As a consequence electrodes with industrially relevant capacities, e.g., >1 mAh/cm², cannot be infiltrated solely with low-boiling-point solvents such as acetonitrile or ketones reported to dissolve poly(DDA)-based electrolytes without the use of a saturated solvent atmosphere as a countermeasure to reduce the evaporation rate and avoid skin formation on the electrode surface. Furthermore, the PC-based solution offers the possibility of using co-solvents to reduce the PC content and/or viscosity of the solution and promote polymer fixation. In practice, this means that during the initial infiltration and during vacuum infiltration the solution flows more readily into the pores (due to lower viscosity or solvents with better contact angle). Lastly, it was surprisingly found that the coating process can be readily performed in the absence of any flowing electric currents or the application of an electric potential to the electrode. Here it is believed that in the absence of further electric driving forces a more homogeneous coating can be achieved. Consequently, the inventive process is superior compared to state of the art processes, wherein cationic polymers in the form of poly(DDA)FSI are, for instance, dissolved in acetonitrile and further electrode active material such as LiNi_{0.8}Mn0.1Co_{0.1}O₂ is added to the solution. This solution is casted on an aluminium or other current collector foil, and dried. Battery electrodes fabricated by this method exhibit limited mechanical stability due to the soft nature of plasticized poly(DDA)FSI. Furthermore, battery electrodes fabricated by this method tend to exhibit residual pores due to rapid solvent evaporation resulting from the high vapor pressure of acetonitrile. Battery electrodes fabricated by this method make it difficult to cycle electrodes with industrially relevant capacities >1.0 mAhcm⁻². Alternatively, battery electrodes could be produced by mixing poly(DDA)FSI with a conventional binder such as polyvinylidene fluoride (PVdF) in a one step process. However, usual solvents such as N-methyl-2-pyrrolidone (NMP), dimethyl sulfoxide (DMSO), or dimethylacetamide (DMAc) can dissolve PVdF but require temperatures of 120°C to be removed. Poly(DDA)FSI-based electrolytes decompose above 80°C (visible yellow/brown colloration) and trapped solvent residues can harm the cell performance. In addition, solvents like NMP, DMSO or DMAc are either dangerous, toxic on their own, or can form toxic mixtures and attempts are made to avoid these in industrial battery production processes.

The inventive process is a process for coating electrode surfaces with a cationic polymer. Standard battery electrodes comprise a metallic current collector, e.g. aluminium or copper, and attached to and surrounding the current collector the active electrode material, optionally including further materials like binders conductive agents etc.. The cationic polymer may be deposited primarily on the surface of the active electrode material. A cationic polymer is a polymer consisting of or comprising positively charged group in each monomer and, consequently later on the polymer backbone. A polymer in the sense of this invention comprises at least 10 monomer units in the polymer backbone. Preferably, the cationic polymer may comprise at least 25 and further preferred at least 100 monomers in the polymeric backbone.

In process step a) an electrode is provided. The inventive process can be used to coat a variety of different electrodes or electrode types. With the above-described process anode and cathode materials in the form of electrodes or larger substrates comprising electrode compositions can be coated. A further advantage is, that the coating of the electrode surface does not have to be performed within a battery cell surrounding. It is possible, that the electrode material is coated outside of a battery surrounding and after the coating process the electrodes are cut or punched from larger surfaces according to the needed geometries. Therefore, highly homogeneous electrodes of various shapes are obtainable. Preferably the electrodes are electrodes for alkali secondary batteries. Further preferred, the electrodes are electrodes for Li secondary batteries. Suitable electrode may comprise a metal current collector and on top of the current collector an active electrode material, suitable for interaction with the charged species in the course of electric charging and discharging operations. The process according to the invention may include the deposition of a cationic polymer on the following active electrode materials: LMO, NMC, LNMO, LFP, NCA, LCO, LTO, LMFP.

In process step b) a cationic polymer according to the following formula I 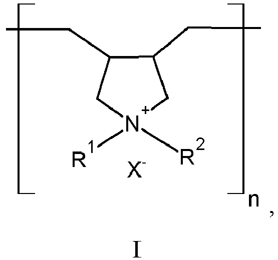 wherein X⁻ is selected from the group consisting of Cl⁻, FSI⁻, TFSI⁻, TFA⁻, BETI⁻, BF₄⁻, DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000 is dissolved in a solvent, wherein the solvent comprises equal to or greater than 30 wt.-% propylene carbonate. In this step the cationic polymer coating solution is prepared. Polymers with poly(DDA) cationic chains and derivatives thereof as well as combinations with alternative anions including poly(DDA)FSI, poly(DDA)TFSI, poly(DDA)BETI and any other anions can be used. The cationic polymer and optionally other substances like conductive salts and/or ionic liquids are dissolved in the solvent, wherein a major part of the solvent is based on propylene carbonate. The choice of PC results in a polymer dissolution process, wherein the polymer is homogeneously distributed in the solvent. Preferably the PC-content in the overall solvent, i.e. all liquid components besides ionic liquids, can be equal to or greater than 40 wt.-%, 50 wt.-%, 60 wt.-% and, preferably, equal to or greater than 70 wt.-%. The dissolution can be performed under elevated temperatures and assisted by stirring. The weight ratio between the gel polymer electrolyte comprising the cationic polymer and optionally further solid components like, e.g. conductive salts, and the overall solvent mainly comprising PC may range from 1:0.5 up to 1:1000, with a preferred maximum ratio of 1:100, 1:50, 1:25, 1:15, 1;10 or 1:2. Linear and branched C1-C5 alkyl might for instance include methyl, ethyl, propyl, butyl, pentyl. The alkyl chains can be fluorinated in one or more positions. It is also possible, that the fluorinated alkyl-derivatives are perfluorinated.

In process step c) at least one electrode surface of the electrode provided in process step a) is coated by deposition of the polymer solution obtained in process step b) to at least a part of the electrode surface. The coating of the active electrode material on the top of the current collector may be performed according to standard coating procedures known in that field. The homogeneous coating solution may for instance be applied to the electrode by blade-coating, spin coating, dipping, spray-coating, drop-coating, slot-die-coating, curtain coating etc.. The coating may be performed in a batch or in a continuous roll-to-roll process. Suitable gap sizes in blade-coating may be in the range of 50-400 µm, preferably in the range of 150 - 250 µm. In blade coating processes the blade can be pushed over the electrode, leaving the electrodes with a defined amount of solution on top of the electrode. The PC-based polymer gel electrolyte precursor solutions enable the infiltration of porous battery electrodes under vacuum and/or mild heating.

In process step d) the coated electrode obtained in process step c) is dried. Because the solvent for dissolving the cationic polymer is mainly based on PC, several advantages are achieved. Previously known solvents for cationic polymers like poly(DDA)FSI-based electrolytes such as NMP, DMSO, or DMAc, are either dangerous, toxic on their own, or can form toxic mixtures and attempts are made to avoid these in industrial processes. In contrast to PC, which can be removed at 55 °C, these solvents require drying temperature of 120°C to be removed. Nevertheless, poly(DDA)FSI-based electrolytes decompose above 80 °C (visible yellow/brown coloration) and trapped solvent residues can harm the electrode surface and influence the cell performance. These solvents are also capable of dissolving PVdF, which negatively impacts the mechanical integrity of prefabricated commercial battery electrodes with PVDF binder. For the inventive drying process, the coated electrodes can be transferred into a vacuum furnace and dried under vacuum at 55 °C for 12 h to remove the PC. Optionally, the electrodes are left to rest before the vacuum drying step. Optionally, a second coating can be applied to create a buffer layer on top of the electrode to improve contact with the separator of the battery cell.

Within a preferred embodiment, the coating of the electrode surface in process step c) is performed without the application of an electric potential or the flux of an electric current to or from the electrode. One of the major advantages of the process according to the invention is, that homogeneous coatings are obtainable, because the coating process is or may be performed outside of the surrounding of an electrochemical cell. Larger throughputs and a more even coating is obtainable by coating larger surface areas and cutting the desired shape out of the coated larger surfaces. In addition, it seems that the absence of further electric forces in the coating process improves the coating outcome. Without being bound by the theory it appears that the coating of charged polymers can be applied more evenly in case that no current or voltage is applied or acting during the coating process.

In a preferred embodiment of the process the weight ratio of the cationic polymer and the solvent in process step b), calculated by the polymer weight divided by the solvent weight, can be equal to or greater than 0.01 and equal to or less than 10. In order to provide the necessary viscosity and flowability to the polymeric solution is has been found suitable to use at least above indicated solvent amount. Within this range homogeneous cationic polymeric solutions are obtainable, which can be evenly applied to the electrode surfaces. Lower solvent amounts may be not suitable, because no homogeneous dissolution of the polymer can be achieved. Higher solvent contents may be not suitable, because the viscosity and polymer coating density will be too low, and the drying time is unnecessarily increased. Preferred ratios can further be in the range of equal to or greater than 0.2 and equal to or less than 8 and further preferred in the range of equal to or greater than 0.3 and equal to or less than 5.

In a preferred embodiment of the process the solvent may comprise equal to or greater than 85 wt.-% propylene carbonate. Propylene carbonate seems to be a good solvent for the described class of cationic polymers. Very homogeneous coating can be achieved using a relatively small amount of solvent in case that the PC-content is rather high. The weight relation is given in this case with respect to the solvents in the coating solution. The group of solvents is formed by the liquid components of the solution except for ionic liquids. The solvents are used to dissolve the polymer and are intentionally removed in the drying step to at least large part.

Within a further preferred embodiment of the process the solvent in process step b) may comprise equal to or greater than 10 wt.-% and equal to or less than 70 wt.-% of a co-solvent selected from the group consisting of C1-C7 alkyl carbonates, wherein the alkyl carbonate comprises the same or different linear alkyl chains. In addition to the solvent PC, further solvents can be present to dissolve the cationic polymer. The further solvents can comprise an overall content in above given range, wherein the weight-content is defined with respect to the overall solvent content. The minimum amount of PC allows the addition of a further solvent comprising a similar chemistry. An example of a working co-solvent is ethylmethylcarbonate (EMC), which can be added to the PC-based electrolyte precursor solution. The solution using PC-EMC as co-solvents possesses lower viscosity. The lower viscosity might for instance be helpful during vacuum infiltration in porous electrodes. In addition, EMC evaporates faster due to the EMC higher vapor pressure, leading to a rapid viscosity increase of the remaining mixture, fixing it in the electrode pores and also decreasing the required drying time as the overall content of PC can be reduced. A suitable solvent mixture may comprise PC:EMC in a ratio of 1:2.

In a preferred embodiment of the process the solvent in process step b) may comprise one or more conductive salts selected from the group consisting of LiTFSI, LiFSI, LiBETI, LiPF₆, LiPO₂F₂, LiDFOB, LiBOB, LiBF₄ or mixtures thereof. Besides coating the electrode surface with the cationic polymer, it is also possible to functionalize the coating by further incorporation of functional molecules into the coating solution. One possibility is to integrate a conductive salt into the polymer solution. Such embodiment results in the integration of further charged species in the coating of the electrode surface. Such further functionalization of the coating may influence and enhance the electric performance of the coating and the overall electrode. Above group of conductive salts has been found compatible to be simultaneously dispersed or dissolved with the cationic polymer in a PC solvent.

In a preferred embodiment of the process, in process step b) one or more ionic liquids can be added to the solvent. In addition to surface modification by coating a cationic polymer it is also possible to functionalize the coating by further incorporation of functional molecules into the coating solution. One possibility is to integrate ionic liquids into the solution and in the coating. Such embodiment results in the integration of further charged species in the coating of the electrode surface and may influence the fluidity and the electric characteristics of the coating. Ionic liquids are normally defined as compounds completely composed of ions with melting point below 100°C. This further functionalization of the coating may influence and enhance the electric performance of the coating and the overall electrode. The ionic liquids usually remain in the coating layer after drying. Ionic liquids remain in the coating to at least 80 wt.-%, preferably 90 wt-% and further preferred 95 wt.-% after the drying step, wherein the initially added amount forms the basis for the given ratio. The addition of an ionic liquid is especially helpful in cases, wherein also a conductive salt is added to the cationic polymer solution. The addition of a conductive salt in combination together with an ionic liquid may further improve the cycle stability and electric performance of the electrodes. Suitable ionic liquids may comprise nitrogen- or phosphorus-based cations.

In a preferred embodiment of the process, the concentration of the conductive salt in process step b) and/or c) can be equal to or greater than 1 mol/L and equal to or less than 15 mol/L. In order to achieve a preferred coating density also including further charged species of a conductive salt in the coating layer, above indicated conductive salt concentrations have been found useful. The electrical properties of the coating layer can be tailored or improved, and the electric performance of the electrode can be enhanced. The addition of further conductive salts, which are integrated in the coating layer can especially improve the cycling stability of the obtainable electrodes.

In a preferred embodiment of the process the cationic polymer may comprise an average molecular weight, measured according to GPC, of equal to or greater than 5 kDa and equal to or less than 750 kDa. In order to provide a mechanical stable and evenly distributed coating layer on the surface of the electrode above indicated cationic polymer sizes have been found useful. Lower molecular weights may be disadvantages, because the surface stabilization may be achieved only with high polymer concentrations. Higher molecular weights may be not suitable, because the solution get too viscous and an even coating of the electrode surface is difficult to achieve.

In a preferred embodiment of the process the coating solution in process step b) may comprise a viscosity, measured by plate-plate rheology at 20°C and a shear rate of 100 1/s, of equal to or greater than 100 mPas and equal to or less than 50 Pas. Highly homogeneous and functional coatings are achievable by the application of a coating solution comprising a viscosity in above defined range. Higher viscosities are less preferred because an even coating thickness is difficult to achieve and especially porous electrode surfaces may comprise uncoated surface pores. Lower viscosities may result in an insufficient mechanical stabilization of the electrode surface.

In a preferred embodiment of the process the cationic polymer weight content in the solution in process step c) can be equal to or greater than 10 wt.-% and equal to or less than 75 wt.-%. Homogeneous coatings on different electrode surfaces are available at moderate drying times in case that the cationic polymer concentration is in above given range. Higher contents can be less suitable, because the homogeneous dissolution of the polymer might be difficult to achieve. Lower concentrations may be less favourable, because drying times are extended due to the presence of large amounts of solvents. In addition, preferably the cationic polymer weight content in the solution can be equal to or greater than 15 wt.-% and equal to or less than 60 wt.-% and, further preferred, equal to or greater than 20 wt.-% and equal to or less than 50 wt.-%.

In a preferred embodiment of the process, the solution in process step b) may comprise the cationic polymer poly(DDAFSI), the conductive salt LiFSI in the ionic liquid PYR13FSI and the solvent propylene carbonate, wherein the weight ratio of the cationic polymer and the conductive salt to solvents, calculated by the weight of the polymer and the conductive salt divided by the weight of the solvents, can be equal to or greater than 0,3 and equal to or less than 5. The integration of the specific conductive salt LiFSI in the ionic liquid PYR13FSI in the coating solution of the cationic polymer poly(DDAFSI) results in mechanically stable and homogeneous surface coatings on flat and porous electrodes. In addition, such coated electrodes exhibit a very good cycling behaviour at different charging rates.

In a preferred embodiment of the process, the solution in process step b) may comprise the cationic polymer poly(DDAFSI), the conductive salt LiFSI or a conductive salt selected from the group consisting of LiTFSI, LiFSI, LiBETI, LiPF₆, LiPO₂F₂, LiDFOB, LiBOB, LiBF₄ in the ionic liquid PYR13FSI and the solvent propylene carbonate, wherein the weight ratio of the cationic polymer and the conductive salt to solvents, calculated by the weight of the polymer and the conductive salt divided by the weight of the solvents, can be equal to or greater than 0,3 and equal to or less than 5. The integration of the conductive salts in the ionic liquid PYR13FSI in the coating solution of the cationic polymer poly(DDAFSI) results in mechanically stable and homogeneous surface coatings on flat and porous electrodes. In addition, such coated electrodes exhibit a very good cycling behaviour at different charging rates.

In a preferred embodiment of the process, the solution in process step b) may comprise the cationic polymer poly(DDAFSI), the conductive salt LiFSI in the ionic liquid PYR13FSI and the solvent propylene carbonate. The integration of the specific conductive salt LiFSI in the ionic liquid PYR13FSI in the coating solution of the cationic polymer poly(DDAFSI) results in mechanically stable and homogeneous surface coatings on flat and porous electrodes. In addition, such coated electrodes exhibit a very good cycling behaviour at different charging rates.

In a preferred embodiment of the process, the dissolution of the polymer in process step b) is performed at a temperature of equal to or greater than 20°C and equal to or less than 80°C. In order to accelerate the dissolution process of the polymer and to achieve or alter the viscosity of the coating solution it has been found useful to vary the temperature in the dissolution an/or the coating step in above defined range.

It is further within the scope of the invention to provide a coated electrode, wherein the electrode comprises a surface coating comprising a cationic polymer according to formula I: 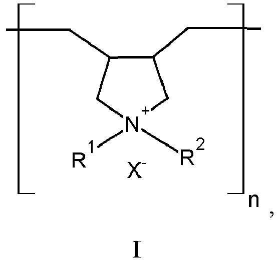 wherein X⁻ is selected from the group consisting of Cl⁻, FSI⁻, TFSI⁻, TFA⁻, BETI⁻, BF₄⁻, DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000; wherein the coating comprises a propylene carbonate content of equal to or greater than 1 wt.-% and equal to or less than 20 wt.-%. Electrodes of different active electrode material can be stabilized and show a better cycling behaviour in case a polymer coating is applied to the surface of the electrode comprising a cationic polymer selected from the above defined group and including a certain amount of the solvent PC, homogeneously distributed within the coating. Without being bound by the theory, it is assumed that a special structure and homogeneity with respect to the solvent and polymer distribution is achieved by applying the coating without the presence of any electric driving forces. In addition, the solvent content distribution within the layer is very homogeneous. Such distribution cannot be achieved by a diffusion process, wherein the solvent is integrated in a coating layer later on, e.g. in the course of the application of an electrolyte. The resulting new product, a polymer-gel-electrolyte-infiltrated solid-state-battery electrode allows the utilization of the full battery electrode capacity specified by the battery electrode manufacturer even for electrodes with high areal capacity of 2.5 mAhcm⁻², which is in the range of commercial batteries. Higher areal capacities are also expected to be achievable.

With respect to the further advantages of the inventive electrodes, it is explicitly referred to the advantages of the inventive process.

It is further within the scope of the invention to provide a coated electrode, wherein the coated electrode is obtained by the inventive process, wherein the process comprises at least the steps of:
a) Provision of an electrode;
b) Dissolution of a cationic polymer according to the following formula I 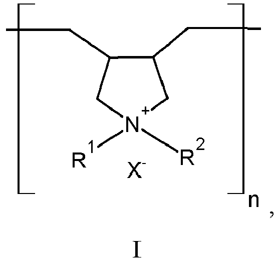 wherein X⁻ is selected from the group consisting of Cl⁻, FSI⁻, TFSI⁻, TFA⁻, BETI⁻, BF₄⁻, DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000; in a solvent, wherein the solvent comprises equal to or greater than 30 wt.-% propylene carbonate;
c) Coating of at least one electrode surface of the electrode provided in process step a) by deposition of the polymer solution obtained in process step b) to at least a part of the electrode surface;
d) Drying of the coated electrode obtained in process step c).

It was surprisingly found, that coated electrodes obtained by the inventive process show a much better cycling behaviour compared to uncoated and compared to coated electrode surface obtainable via an in-situ coating process within the cell surrounding of a battery. Without being bound by the theory, it is assumed that the processing conditions can be controlled much better outside of a battery surrounding and that especially the absence of electric driving forces result in better, e.g. more homogeneous coatings. The resulting new product, a polymer-gel-electrolyte-infiltrated solid-state-battery electrode allows the utilization of the full battery electrode capacity specified by the battery electrode manufacturer even for electrodes with high areal capacity of 2.5 mAhcm⁻², which is in the range of commercial batteries. Higher areal capacities are also expected to be achievable. With respect to the further advantages of the inventive electrodes, it is explicitly referred to the advantages of the inventive process.

In a preferred embodiment of the electrode, the electrode coating may comprise a propylene carbonate content of equal to or greater than 2,5 wt.-% and equal to or less than 10 wt.-%. An advantageous cycling stability is obtained for electrodes comprising a PC content in above defined range. The PC-content can be measured by optical measurements, e.g., quantitative IR-or NIR-Measurements, on top of the coated electrode.

In a preferred embodiment of the electrode, the electrode may comprise a porous electrode surface, wherein the electrode porosity, measured according to mercury porosimetry, is equal to or greater than 5 vol-% and equal to or less than 50 vol-%. The coating is in particular advantageous in cases, wherein the electrode comprises a rough and porous surface. The coating can be used to even the electrode surface and to add a protective layer for the active electrode material. Both effects can alter and improve the electric performance of the electrode.

Within a further preferred embodiment of the electrode, the electrode may comprise a surface coating comprising the cationic polymer, wherein the thickness of the surface coating is equal to or greater than 1 µm and equal to or less than 100 µm, preferable equal to or greater than 2,5 µm and equal to or less than 75 µm and further preferred equal to or greater than 10 µm and equal to or less than 50 µm.

It is further within the scope of the invention to provide a solid electrolyte cell, wherein the solid electrolyte cell at least comprises an anode, a cathode and a solid electrolyte between the anode and the cathode, wherein the anode or the cathode is a coated electrode according to the invention. The inventive of coating of electrode surfaces is especially suitable in cases, wherein solid electrolytes are used in the cell. The electric performance and in particular the cycle stability of the cell can be enhanced in cases, wherein either the anode, the cathode or both electrodes comprise a coating according to the invention. Within a preferred embodiment the coating can be used as a surface coating and, at the same time, the solid electrolyte and separator of a solid electrolyte cell.

Further details, features and advantages of the subject matter of the invention will be apparent from the dependent claims and from the following description of the figures and associated examples. The figures show:
Fig. 1 a rate capability experiment of a cell according to the invention and a cell coated in a process using acetonitrile as a solvent;
Fig. 2 a cycling plot of a cell according to the invention and a cell coated in a process using acetonitrile as a solvent.

### Example:

### Step a)

A porous NMC811 electrode comprising an areal capacity of 1 mAh cm⁻² and a surface area of 10x10cm is fixed to a vacuum bed coater.

### Step b)

0.4 g Poly(DDAFSI) and 0.6 g of a 3M LiFSI in PYR13FSI solution are dissolved in 1g propylene carbonate under stirring.

### Step c)

The solution obtained in step b) is blade-coated (100 µm gap) on the electrode surface. The coated NMC811 electrode is pre-dried under reduced atmosphere (<10⁻³ mbar) for 6 h in the antechamber of a glovebox. This step is performed in order to degas the coating and improve the electrode wetting with coating solution prior to an additional blade-coating step (100 µm gap).

### Step d)

The twice coated NMC811 electrode is dried under reduced atmosphere for 6 h, punched into 12 mm discs and dried at 55 °C under reduced atmosphere (<10⁻³ mbar) for 12 h to form the final dried product. The electrode discs were transferred into an Ar-filled glovebox (O₂ < 0.1 ppm, H₂O < 0.1 ppm) and stored for cell preparation. The average thickness of dried coating is around 50 µm and includes the functionalities of an electrode coating and a solid electrolyte.

### Preparation of battery cells

A battery cell was assembled. The negative electrode was made of lithium. NMC811 was used as the active material of the positive electrode with 3M LiFSI in PYR13FSI (overall 60wt.%) with poly(DDAFSI) infiltrated into the pores as described above. The 3M LiFSI in PYR13FSI (overall 60wt.%) with poly(DDAFSI) (overall 40wt.%) polymer coating was used as separator and solid electrolyte.

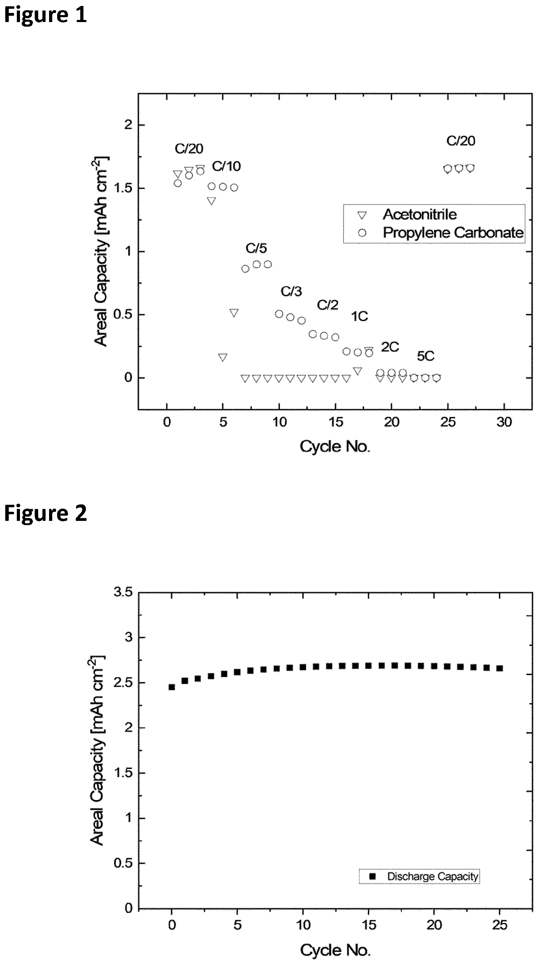

Fig. 1 shows rate capability experiments, obtained by a cell according to the invention as described above and a state-of-the-art cell using acetonitrile as solvent for the electrode coating and infiltration. The areal discharge capacity of a secondary lithium battery cell is shown as a function of the applied discharge rate (1 C = 150 mAg⁻¹) within a cycle experiment. The cells were operated galvanostatically with an increasing charge and discharge current. The results are very reproducible and clearly show an improved rate capability of electrodes prepared according to the invention in comparison to coating prepared with acetonitrile as solvent.

Fig. 2 shows a cycling plot obtained using the polymer-coated NMC811 electrodes as described above. The battery cell has the following structure. The negative electrode was made of lithium. NMC811 (2.6 mAh cm⁻² areal capacity) was used as the active material of the positive electrode with 3M LiFSI in PYR13FSI (overall 60wt.%) with poly(DDAFSI) infiltrated into the pores. The 3M LiFSI in PYR13FSI (overall 60wt.%) with Poly(DDAFSI) (overall 40wt.%) polymer electrolyte was used as separator and solid electrolyte. The cells were operated galvanostatically, demonstrating the utilization of the full areal capacity of 2.6 mAh cm⁻². The areal discharge capacity of a secondary lithium battery cell is shown as a function of the performed charge/discharge cycles.

## Claims

1. Process for coating electrode surfaces with a cationic polymer, **characterized in that** the process comprises at least the steps of:
a) Provision of an electrode;
b) Dissolution of a cationic polymer according to the following formula I 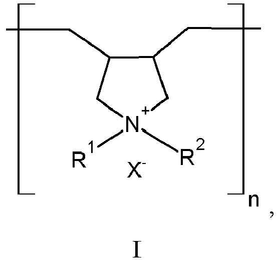
wherein X⁻ is selected from the group consisting of Cl⁻, FSI⁻, TFSI⁻, TFA⁻, BETI⁻, BF₄⁻, DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000;
in a solvent, wherein the solvent comprises equal to or greater than 30 wt.-% propylene carbonate;
c) Coating of at least one electrode surface of the electrode provided in process step a) by deposition of the polymer solution obtained in process step b) to at least a part of the electrode surface;
d) Drying of the coated electrode obtained in process step c).

2. Process according to claim 1, wherein the weight ratio of the cationic polymer and the solvent in process step b), calculated by the polymer weight divided by the solvent weight, is equal to or greater than 0.01 and equal to or less than 10.

3. Process according to any one of the preceding claims, wherein the solvent comprises equal to or greater than 85 wt.-% propylene carbonate.

4. Process according to any one of the preceding claims, wherein the solvent in process step b) comprises equal to or greater than 1 wt.-% and equal to or less than 70 wt.-% of a co-solvent selected from the group consisting of C1-C7 alkyl carbonates, wherein the alkyl carbonate comprises the same or different linear alkyl chains.

5. Process according to any one of the preceding claims, wherein in process step b) one or more conductive salts are added to the solvent, wherein the conductive salts are selected from the group consisting of LiTFSI, LiFSI, LiBETI, LiPF₆, LiPO₂F₂, LiDFOB, LiBOB, LiBF₄ or mixtures thereof.

6. Process according to claim 5, wherein the concentration of the conductive salt in process step b) and/or c) is equal to or greater than 1 mol/L and equal to or less than 15 mol/L.

7. Process according to any one of the preceding claims, wherein the cationic polymer comprises an average molecular weight, measured according to GPC, of equal to or greater than 5 kDa and equal to or less than 750 kDa.

8. Process according to any one of the preceding claims, wherein in process step b) one or more ionic liquids are added to the solvent.

9. Process according to any one of the preceding claims, wherein the cationic polymer weight content in the solution in process step c) is equal to or greater than 10 wt.-% and equal to or less than 75 wt.-%.

10. Process according to any one of the preceding claims, wherein the solution in process step b) comprises the cationic polymer poly(DDAFSI), the conductive salt LiFSI in the ionic liquid PYR13FSI and the solvent propylene carbonate, wherein the weight ratio of the cationic polymer and the conductive salt to solvents, calculated by the weight of the polymer and the conductive salt divided by the weight of the solvents, is equal to or greater than 0,3 and equal to or less than 5.

11. Process according to any one of the preceding claims, wherein the dissolution of the polymer in process step b) is performed at a temperature of equal to or greater than 20°C and equal to or less than 80°C.

12. Coated electrode, **characterized in that** the electrode comprises a surface coating comprising a cationic polymer according to formula I: 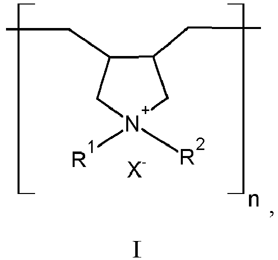 wherein X⁻ is selected from the group consisting of Cl⁻, FSI⁻, TFSI⁻, TFA⁻, BETI⁻, BF₄⁻ , DFOB⁻ , BOB⁻, NO₃⁻, PO₂F₂⁻; R¹, R² are independently selected from the group consisting of H, C1-C5 linear or branched alkyl or fluorinated derivatives thereof, and n = 10 - 10.000; wherein the coating comprises a propylene carbonate content of equal to or greater than 1 wt.-% and equal to or less than 20 wt.-%.

13. Electrode according to claim 12, wherein the electrode coating comprises a propylene carbonate content of equal to or greater than 2,5 wt.-% and equal to or less than 10 wt.-%.

14. Electrode according to any one of claims 12 or 13, wherein the electrode comprises a porous electrode surface, wherein the electrode porosity, measured according to mercury porosimetry, is equal to or greater than 5 vol-% and equal to or less than 50 vol-%.

15. Solid electrolyte cell at least comprising an anode, a cathode and a solid electrolyte between the anode and the cathode, **characterised in that** the anode or the cathode is a coated electrode according to any one of claims 12 to 14.
